# EUROPEAN PATENT APPLICATION

(11) **EP 4 521 184 A1**
(43) Date of publication of application: **12.03.2025**
(21) Application number: 23795516.6
(22) Date of filing: 27.04.2023
(51) Int. Cl.: G05D 1/02, G06V 10/14, G06V 10/774, G06V 10/82, G06N 3/04, G06N 3/08

(54) **ROBOT, METHOD FOR JUDGING STARTUP MODE THEREOF, AND DATA PROCESSING DEVICE**

(30) Priority: 30.04.2022 CN 202210469186
(71) Applicant: Suzhou Radiant Photovoltaic Technology Co., Ltd, Suzhou, Jiangsu 215164 (CN)
(72) Inventor: XU, Fei, Suzhou, Jiangsu 215164 (CN); DENG, Long, Suzhou, Jiangsu 215164 (CN)
(74) Representative: Murgitroyd & Company
(86) International application number: PCT/CN2023/091029
(87) International publication number: WO 2023/208084

(57) **Abstract**

The present application discloses a robot and its startup mode determination method and data processing device. The robot selects the left startup mode or the right startup mode according to the judgment model through the camera. After the robot is placed on the photovoltaic panel, it can automatically select the startup mode to clean the photovoltaic panel array.

## Description

### CROSS REFERENCE TO RELATED APPLICATIONS

The present application claims priority of the China Patent Application No. 202210469186.X, filed on April 30, 2022 with the China National Intellectual Property Administration, titled "a robot and startup mode determination method thereof and data processing device", which is incorporated by reference in the present application in its entirety.

### FIELD OF INVENTION

The present application relates to a robot and startup mode determination method thereof and data processing device.

### BACKGROUND OF INVENTION

The control methods of the cleaning process can be roughly divided into two methods: a manual control and an automatic control, after the cleaning robot is placed on a photovoltaic panel array. The manual control method requires an operator for each robot, which is more expensive and less practical. The automatic control method requires setting some fixed instructions for the robot to let the robot follow the planned route.

Since photovoltaic panels are all tilted, an initial position of the robot placed on the photovoltaic panel is generally at a lowest point of the photovoltaic panel array, preferably at a lower left corner or a lower right corner of the array. However, the robot's traveling path on the panel array is related to its initial position on the panel array. If the robot's initial positions are different, its startup mode and operating mode are also different, and its action instruction sets are also different. In the currently technology, the staff needs to manually set the startup mode according to the placement position of the robot. The disadvantage is that on the one hand, the staff's operation is troublesome and they need to learn the operating method. On the other hand, an incorrect selection of the staff mode can lead to an error in the robot's travel process, deviating from the preset path, or, alternatively, lead to an incorrect selection of the robot's orientation and a fall from the photovoltaic panel.

Therefore, after the robot is placed on the photovoltaic panel, there is a need for an operating mode judgment method to obtain the robot's position on the photovoltaic panel array, thereby determining its operating mode and selecting an appropriate instruction set.

### SUMMARY OF INVENTION

A purpose of the present application is to provide a robot and a startup mode determination method thereof, to solve the technical problem of complicated operations required for robot startup mode selection.

In order to achieve the above purpose, the present application provides using a deep learning algorithm to construct a startup mode judgment model; using cameras on a left of a robot and a right side of the robot to collect at least one real-time picture when the robot is placed on a photovoltaic panel array; inputting the real-time picture into the startup mode judgment model; and determining a startup mode of the robot in an initial state, wherein the startup mode comprises a left startup mode and a right startup mode.

The present application also provides a data processing device, including a memory for storing an executable program code, and a processor connected to the memory, and running a computer program corresponding to the executable program code by reading the executable program code to perform the robot startup mode determination method described above.

The present application also provides a robot including the above data processing device.

Further, the robot includes a vehicle body and a camera, the vehicle body can travel on the photovoltaic panel array, the cameras are disposed on a left side of the vehicle body and a right side of the vehicle body; the cameras are configured to collect real-time images of the photovoltaic panel array; wherein the data processing device is installed in the vehicle body and connected to the cameras.

The technical effect of the present application is to collect real-time images on both sides of the vehicle body through the cameras, record the real-time images into a mode judgment model, and then select the left startup mode or the right startup mode, so that the robot can automatically select the startup mode after being placed on the photovoltaic panel, and execute corresponding control instructions for cleaning without manual operation. There is no need to set a startup mode button on the present application, which makes the user's operation simpler and effectively improving work efficiency and operational safety.

### DESCRIPTION OF FIGURES

The technical solutions and other beneficial effects of the present application will be apparent through a detailed description of the specific embodiments of the present application in conjunction with the accompanying figures.
FIG. 1 is a road map of the robot described in Embodiment 1 traveling on the photovoltaic panel array in a left startup mode.
FIG. 2 is a road map of the robot described in Embodiment 1 traveling on the photovoltaic panel array in a right startup mode.
FIG. 3 is a side view of the robot according to Embodiment 1.
FIG. 4 is an overall flow chart of a method of determining the startup mode of the robot in Embodiment 1.
FIG. 5 is a flow chart of the steps of constructing a startup mode judgment model using a deep learning algorithm in Embodiment 1.
FIG. 6 is a flow chart of the steps of collecting two or more training samples in Embodiment 1.
FIG. 7 is a flow chart of the robot control steps described in Embodiment 1.
FIG. 8 is a side view of the robot according to Embodiment 2.
FIG. 9 is a top view of the robot according to Embodiment 2.
FIG. 10 is an overall flow chart of the method for determining the startup mode of the robot in Embodiment 2.

### DETAILED DESCRIPTION OF EMBODIMENTS

The technical solutions in the embodiments of the present application will be clearly and completely described below with reference to the accompanying figures in the embodiments of the present application. Obviously, the described embodiments are only some of the embodiments of the present application, but not all of the embodiments. Based on the embodiments in the present application, all other embodiments obtained by those skilled in the art without inventive steps shall fall within a scope of protection of the present application.

The following disclosure provides many different embodiments or examples for implementing the various structures of the present application. To simplify the disclosure of the present application, the components and arrangements of specific examples are described below. Of course, they are merely examples and are not intended to limit the application. Furthermore, the present application may repeat reference numbers and/or reference letters in different examples, such repetition being for the purposes of simplicity and clarity and does not by itself indicate a relationship between the various embodiments and/or arrangements discussed. In addition, the present application provides examples of various specific processes and materials, but one of ordinary skill in the art will recognize the application of other processes and/or the use of other materials.

### Embodiment 1

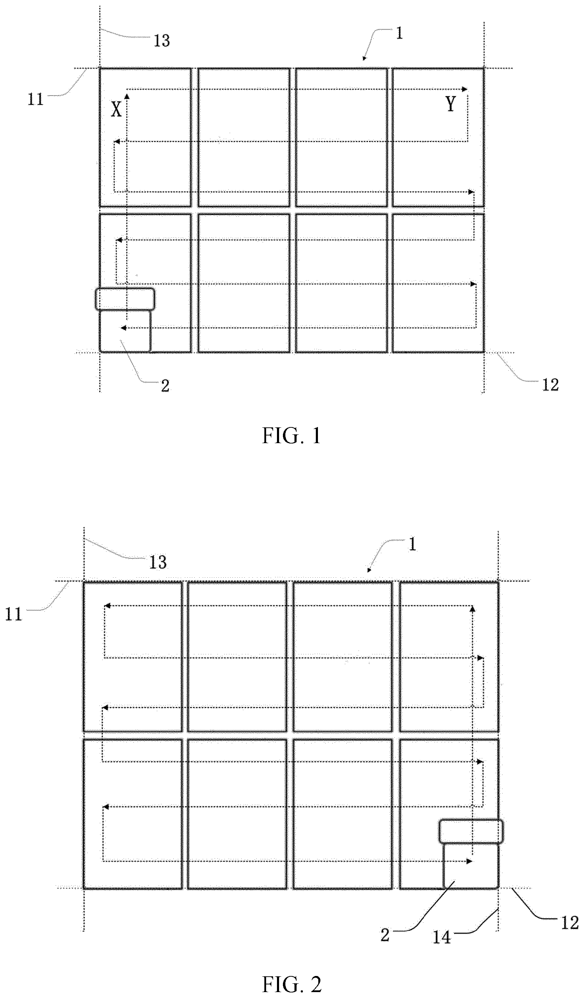

Embodiment 1 of the present application discloses a robot for cleaning the photovoltaic panel array 1. Since the photovoltaic panels are all tilted, an initial position of the robot placed on the photovoltaic panel is generally at a lowest point of the photovoltaic panel array, preferably at a lower left corner of the array or a lower right corner of the array, as shown in FIGs. 1 and 2. The robot 2 in this embodiment can automatically select the left startup mode or the right startup mode, no need for staff to set up its operation, which improves work efficiency.

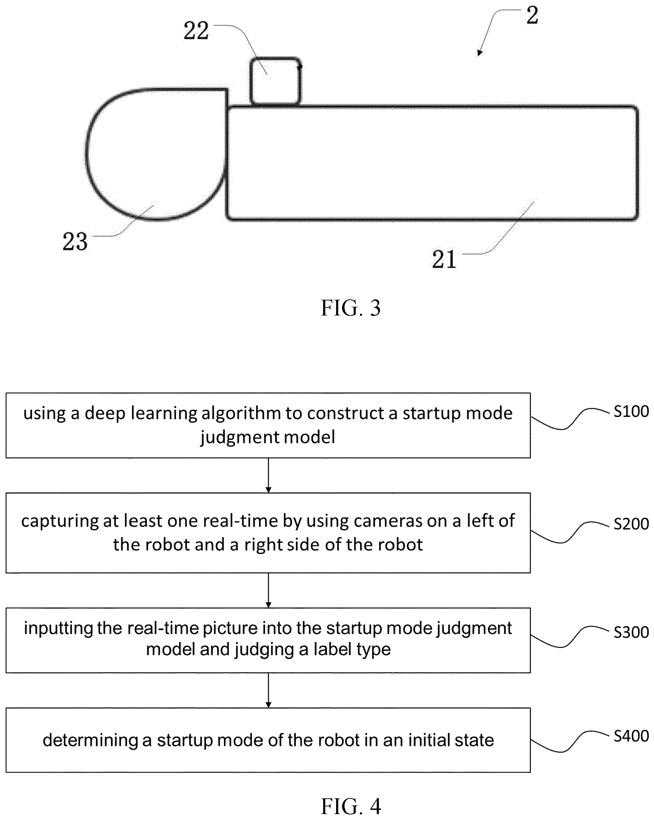

As shown in FIG. 3, the robot 2 includes a vehicle body 21, a camera 22, and data processing device (not shown in the figure). The vehicle body 21 can move on the photovoltaic panel array 1. A front end of the vehicle body 21 or a rear end of the vehicle body 21 is equipped with a cleaning portion 23 which preferably a roller brush. The data processing device is positioned in the vehicle body 21. There are two cameras 22, respectively positioned on the left side of the vehicle body 21 and the right side of the vehicle body 21. The two cameras 22 are respectively configured to obtain real-time images of the photovoltaic panel arrays 1 on the left of the vehicle body 21 and the right side of the vehicle body 21, and send the image information to the data processing device. The information processing device is installed in the vehicle body 21 and connected to the camera 22. It can receive and process the image information sent by the camera 22, and select the left startup mode or the right startup mode according to the image information.

As shown in FIGs. 1 and 2, the photovoltaic panel array 1 is an inclined array planar structure composed of more than two photovoltaic panels. The photovoltaic panel array 1 has several rows and columns, and an overall shape is generally rectangular or square. Therefore, the photovoltaic panel array 1 has four edge lines, wherein the four edge lines include: an upper edge line 11 and a lower edge line 12 that are parallel to each other, and a left edge line 13 and a right edge line 14 that are parallel to each other. The staff will place a head of the vehicle body 21 towards the upper edge line 11 When the robot 2 is placed on the photovoltaic panel array 1, so the cameras 22 on the left and right sides of the vehicle body 21 face the left edge 13 and the right edge 14 respectively to obtain images with the left edge line 13 and the right edge line 14. The data processing device processes the image and determines that the vehicle body 21 is positioned at the lower left corner or the lower right corner of the photovoltaic panel array 1, and then determines whether to execute the left startup mode or the right startup mode. The four sides of each photovoltaic panel are equipped with metal frames to protect the panel and make the panel easy to identify. Select left startup mode or right startup mode according to the judgment result, and execute the corresponding cleaning plan. For convenience of description, an extending direction of the left side line 13 is defined as a first direction X, and an extending direction of the upper side line 11 is defined as a second direction Y.

The photovoltaic panel array 1 is an inclined plane. In order to improve a grip of the robot 2 and prevent the robot 2 from sliding off the panel, an adsorption device is usually provided on its bottom surface. However, there is usually a gap provided between two adjacent rows of panels. If the gap is always positioned below the robot 2 while the robot 2 is walking, it will cause the adsorption device to fail. Therefore, in order to prevent the robot 2 from slipping, the robot 2 cannot move above the gap between two rows of photovoltaic panels 10 when cleaning each row of photovoltaic panels 10.

During the cleaning process, dust, garbage, and sewage will slide down along the panel surface, in order to ensure the cleaning effect, the robot should start from the lower left corner or the lower right corner of the photovoltaic panel array 1 and drive straight along the left edge line or right edge line of the photovoltaic panel array 1 from the lower end of the matrix to the upper end of the matrix. Then walk along the first direction on the matrix, turn left or right at the edge of the matrix, and continue walking in the opposite direction on the matrix along the first direction. A height of the robot's vehicle body traveling in the first direction is lower than a height of the robot's vehicle body previously traveled in the first direction.

Before the robot 2 is placed on the photovoltaic panel array 1, a size of the photovoltaic panel array 1 is an unknown parameter for the robot 2. Since the sizes of the photovoltaic panel arrays 1 are different, the optimal traveling routes of the robot 2 on the panel array are different, the distances of each lateral travel are different, the number of U-turns on the same row of panels are also different, and its working modes are also different. The robot 2 needs to automatically calculate the size of each photovoltaic panel 10 in the array of photovoltaic panels 10 during its travel, especially the length of each row of photovoltaic panels 10 in its tilt direction. According to its size calculation, the robot needs to calculate the size of each photovoltaic panel 10 in each row of photovoltaic panels 10. The number and distance of reciprocating walking on the robot 2 are calculated, and the number and position of the U-turn of the robot 2 are calculated to ensure that every corner of each row of photovoltaic panels 10 can be cleaned.

A panel array area that the vehicle body passes through each time when it travels in the first direction can be defined as a cleaning channel. Each cleaning channel is equal to or smaller than the width of the cleaning part 23. The cleaning portion 23 may extend outside the cleaning channel when the vehicle body travels in a cleaning channel, the cleaning part 23 may extend outside the cleaning channel.

At least one photovoltaic panel 10 in the same row can be divided into N cleaning channels extending in the first direction, extending from the left side of the array of the photovoltaic panels 10 to its right side, wherein N is an integer portion of a quotient of a length of this row of photovoltaic panels 10 in the inclined plane and a width of the cleaning portion 23 plus one. For example, if the length of a row of panels is 2 meters, the width of the roller brush is 0.7 meters, and N is 3, the row of photovoltaic panels 10 needs to be divided into three lateral sweeping channels, and the sweeping robot walks back and forth three times in order to sweep the entire row of panels and leave no dead space for cleaning. The three sweeping channels from top to bottom are the first channel, the second channel, and the third channel, the width of the three sweeping channels can be set to 0.7 meters, 0.6 meters and 0.7 meters, respectively, when the vehicle body in the middle of the second channel, the brush ends of the edges will be extended to the first channel and the third channel.

In this solution, when the vehicle body is cleaning the photovoltaic panel array 1, if the initial position of the robot on the photovoltaic array are different (lower left corner or lower right corner), its subsequent set of control instructions to be executed is also different, and therefore, it is a critical technical issue for the robot to determine its initial position on the photovoltaic panel array and accordingly to select the startup mode, and to select the left startup mode or the right startup mode.

This embodiment also provides a method of determining the startup mode of the above-mentioned robot, as shown in FIG4, which specifically includes the following steps S100-S400.

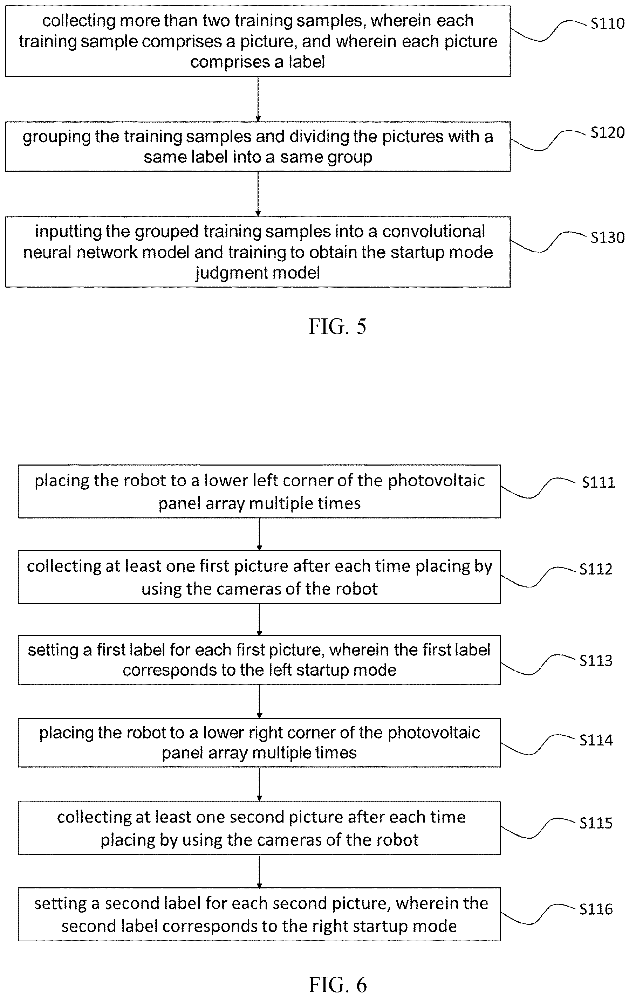

Step S100: using a deep learning algorithm to construct a startup mode judgment model. As shown in FIG5, step S100 includes the following steps: S110, collecting more than two training samples, wherein each training sample comprises a picture, and wherein each picture comprises a label; S120, grouping the training samples and dividing the pictures with a same label into a same group; S130. inputting the grouped training samples into a convolutional neural network model, using the convolutional neural network algorithm for training, and obtaining a classifier, that is, the startup mode judgment model. This embodiment preferably uses caffe deep learning algorithm to train the model.

As shown in FIG. 6, step S110 specifically includes the following steps: S111. placing the robot 2 to a lower left corner of the photovoltaic panel array 1 multiple times; S112. collecting at least one first picture after each time placing by using the cameras 22 of the robot 2; S113. setting a first label for each first picture, wherein the first label corresponds to the left startup mode; S114. placing the robot 2 to a lower right corner of the photovoltaic panel array 1 multiple times; S115. collecting at least one second picture after each time placing by using the cameras 22 of the robot 2; S116, setting a second label for each second picture, wherein the second label corresponds to the right startup mode. In steps S112 and S115, the two cameras on the left side and right sides of the robot collect a large number of pictures in real time, generally more than 5,000 pictures, each picture is set with a label corresponding to the left startup mode or the right startup mode. In other embodiments, it is also possible steps S114 to S116 first and then perform steps S111 to S113.

Step S200, capturing at least one real-time picture when the robot 2 is placed on a photovoltaic panel array 1 by using cameras on a left of a robot 2 and a right side of the robot 2; the cameras 22 are provided with two, respectively positioned on the left side of the vehicle body 21 and the right side of the vehicle body 21, for obtaining real-time images of the photovoltaic panel arrays 1 on the left and right sides of the vehicle body 21 in real time, respectively. The robot's left side camera cannot capture an image of the panel array, but the robot's right-side camera can capture an image of the panel array positioned on the right side of the vehicle body when the robot is placed in the lower left corner of the panel array and the front end of the vehicle is facing the upper sideline of the panel array. Similarly, when the robot is placed at the lower right corner of the panel array and the front end of the vehicle is facing the upper border of the panel array, the left camera thereof can capture an image of the panel array positioned on the left side of the vehicle body.

Step S300, sending the image information to the data processing device by the camera 22, and inputting the real-time picture into the startup mode judgment model; the result output by the model is a label type which can judge by itself whether the tag corresponding to the new picture is the first label or the second label when a new picture is entered into the startup mode judgment model.

Step S400: determining a startup mode of the robot 2 in an initial state. The startup mode includes the left startup mode and the right startup mode. Since the first label corresponds to the left startup mode and the second label corresponds to the right startup mode, the computer can determine the startup mode of the robot 2 in the initial state based on the label type in the previous step. After the startup mode is determined, the robot can execute the control instructions corresponding to the startup mode on its own, travel on the photovoltaic panel array according to the pre-planned preferred path, and clean simultaneously while traveling, wherein the robot needs to clean every corner of the panel array, and also minimize duplicate routes.

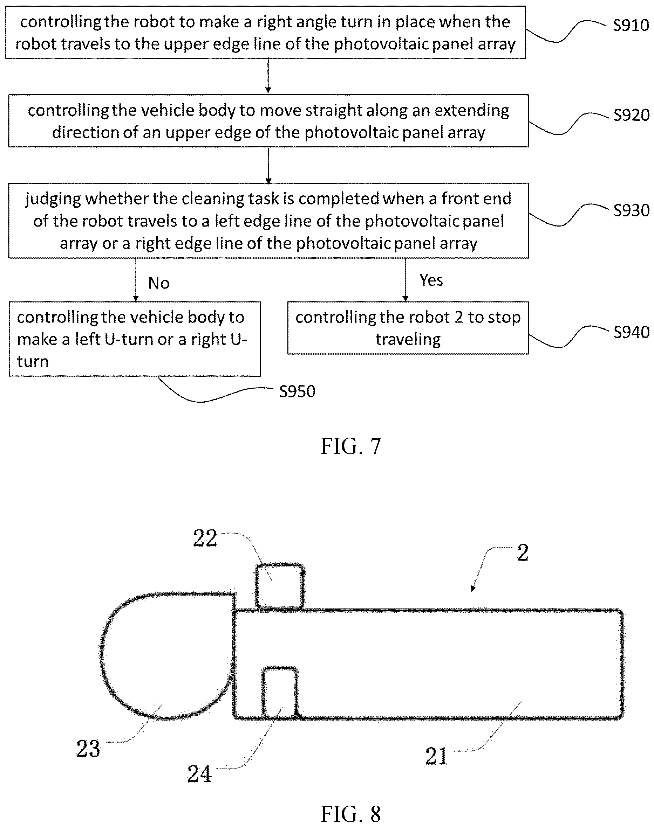

As shown in FIG7, the robot startup mode determination method described in the present embodiment can also perform robot control steps after steps S100 to S400, including the following steps S910 to S950.

Step S910: controlling the robot 2 to make a right angle turn in place when the robot 2 travels to the upper edge line of the photovoltaic panel array 1; controlling the robot 2 to turn right at the right angle if the startup mode is the left startup mode, controlling the robot 2 to turn left at the right angle if the startup mode is the right startup mode.

Step S920, a straight movement controlling step, controlling the vehicle body 21 to move straight along an extending direction of an upper edge of the photovoltaic panel array.

Step S930, a U-turn controlling step, judging whether the cleaning task is completed when a front end of the robot 2 travels to a left edge line 13 of the photovoltaic panel array 1 or a right edge line 14 of the photovoltaic panel array 1.

Step S940: controlling the robot 2 to stop traveling.

Step S950: controlling the vehicle body 21 to make a left U-turn or a right U-turn, and returning to the straight movement controlling step S920.

The purpose of steps S910 to S950 is to realize a reciprocating cleaning of the vehicle body 21 on the photovoltaic panel array 1. After the vehicle body 21 turned around, a new cleaning trajectory is adjacent to or partially overlaps with a previous linear cleaning trajectory. The robot travels on the photovoltaic panel array according to the pre-planned preferred path and cleans synchronously while traveling, the robot needs to clean every corner of the panel array, leaving no dead corners.

The present embodiment also includes a data processing device, which includes a memory and a processor. The memory is configured to store an executable program code. The processor is connected to the memory and reads the executable program code to run the executable program code. A computer program corresponding to the program code to implement at least one step in the above-mentioned method for determining the startup mode of the robot. The memory can also be used to store control instruction sets corresponding to the left startup mode and the right startup mode. The actions performed by controlling the robot in steps S910 to S950 are all implemented through these control instruction sets.

The technical effect of the present embodiment is to collect real-time images on both sides of the vehicle body through the camera, record the real-time images into a mode judgment model, and then select the left startup mode or the right startup mode, so that the robot can be immediately placed on the photovoltaic panel. It can automatically select the startup mode, execute the corresponding control instruction set, and automatically clean without manual operation or setting a startup mode button, making the user's operation simpler and effectively improving work efficiency and operation safety.

### Embodiment 2

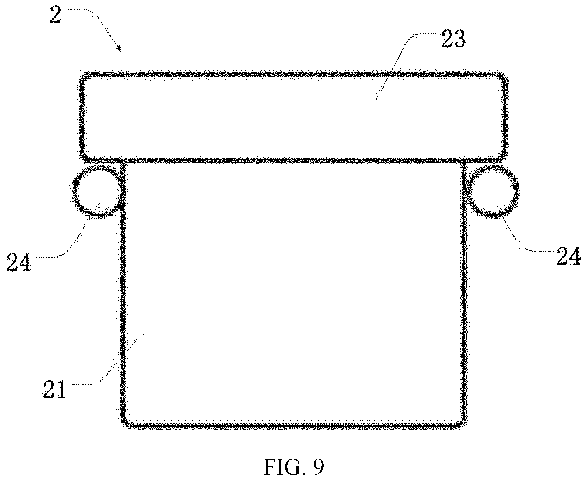

Embodiment 2 includes all the technical solutions in Embodiment 1. One difference is that, as shown in FIGs 8 to 9, the robot provided in Embodiment 2 includes the vehicle body 21, the camera 22, the cleaning portion 23, and the data processing device in Embodiment 1, and further includes a metal sensor 24, which are arranged on the left side of the bottom of the vehicle body and the right side of the bottom of the vehicle body, or fixed to the side walls of the vehicle body and extend to the bottom surface of the vehicle body. A metal sensor generates and sends a signal to the data processing device when a distance between the metal sensor and a metal frame is less than or equal to a preset threshold.

For example, when the robot is placed in the lower left corner of the panel array, the metal sensor on the left side of the body can sense the left frame and generate an electrical signal, and the metal sensor on the left side of the body and position on the photovoltaic panel cannot generate an electrical signal. Therefore, when the metal sensor on the left side of the car body generates an electrical signal and the metal sensor on the right side has no signal, the computer can determine that the initial position of the robot is at the lower left corner of the panel array, and its startup mode is the left startup mode. In the same way, when the metal sensor on the right side of the vehicle body generates an electrical signal and the metal sensor on the left side has no signal, the computer can determine that the initial position of the robot is in the lower right corner of the panel array, and its startup mode is the right startup mode.

The robot can determine the startup mode of the vehicle body through the camera 22 or the metal sensor 24. However, the robot will have a certain probability of error in actual work. If only one method of judgment is used, the judgment may be wrong, causing the robot to fall from the panel, causing a safety accident. This embodiment calculates the two judgment results according to a certain weight ratio to obtain a corrected judgment result, making the startup mode judgment result more accurate.

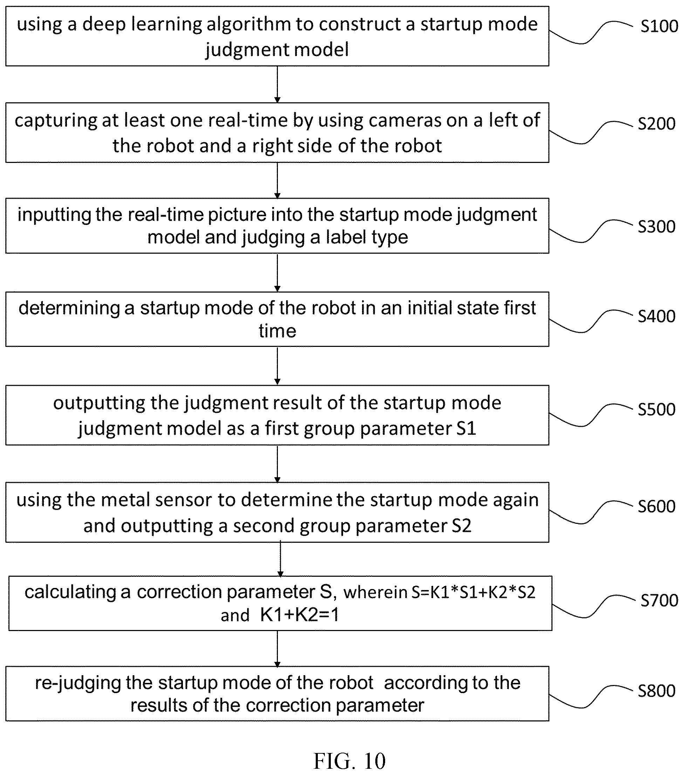

Embodiment 2 includes all the technical solutions in Embodiment 1. Another difference is that, as shown in FIG. 10, Embodiment 2 provides a method of determining a robot startup mode, in addition to steps S100-S400 of Embodiment 1, it further includes the following steps S500 to S800.

S500, in step S400, when judging the startup mode of the robot 2 in the initial state, the data processing device can output the judgment result of the startup mode judgment model as a first group parameters S1; defining the first group parameter S1=0 when the startup mode is the left startup mode, and defining the first group parameter S1=1 when the startup mode is the right startup mode.

S600: Using the metal sensor 24 to determine again the startup mode of the robot 2 in the initial state, and output second group parameters. As shown in FIG. 8, step S600 uses the metal sensor 24 to determine the startup mode again, including the following steps S610 to S630. Step S610: Setting a metal sensor 24 on the left side and right side of the bottom of the robot 2, respectively, defined as the left sensor and the right sensor. Step S620: The robot 2 synchronously collects the electrical signals generated by the left sensor and the right sensor when the robot 2 is placed on the photovoltaic panel array 1. Step S630, determining the startup mode of the robot 2 in the initial state is the left startup mode when the left sensor has a signal and the right sensor has no signal; determining the startup mode of the robot 2 in the initial state is the right startup mode when the left sensor has no signal and the right sensor has a signal.

The second group parameter S2=0 is defined when the startup mode is the left startup mode. The second group parameter S2=1 is defined when the startup mode is the right startup mode. When the vehicle body 21 is close to the left side line 13 or the right side line 14, since a height of the metal frame at the edge is low and the metal frame is positioned in a blind spot of the camera sensor, there is no metal frame in the image acquired by the camera sensor, and it is not possible to recognize the startup mode by the judgment model. The metal sensor 24 generates and sends electrical signals to the output processing device. The metal sensor 24 has the characteristics of small detection range and high sensitivity. Generally, the detection range is tens of millimeters. This electrical signal represents that the vehicle body 21 is close to the edge of the photovoltaic panel array 1 with the metal frame. Since the frame position collectors are arranged on both sides of the vehicle body 21, the data processing device receives the electrical signal from the metal sensor 24, which means the vehicle body 21 has been close to the left side line 13 or the right side line 14 of the photovoltaic panel array 1.

S700. Calculating a correction parameter S according to the first group parameters and the second group parameters, wherein S=K1*S1+K2*S2, and wherein K1 and K2 are preset weight coefficients, and wherein K1+K2=1. When the correction parameter S tends to 0, the startup mode is determined to be the left start mode; when the correction parameter S tends to 1, the startup mode is determined to be the right start mode. The correction parameter S and 0 for difference, get a first difference S-0, if the difference is less than a preset threshold, such as 0.1 or 0.2, it can be determined that S tends to 0. Similarly, the correction parameter 1 and S for difference, get the second difference 1-S, if the difference is less than a preset threshold, for example, 0.1 or 0.2, it can be determined that S tends to 0, and thus can be determined that S tends to 0 or tends to 1. The setting of the calibration parameter can avoid the misjudgment caused by the error generated by a single judgment mode, and therefore the result is more accurate.

S800: Re-judging the startup mode of the robot 2 in the initial state according to the results of the correction parameter. The judgment result in step S800 is more accurate than the judgment results in step S400, effectively reducing the probability of an accident.

The robot startup mode determination method described in Embodiment 2, after steps S100 to S800, also includes steps S910 to S950 described in Embodiment 1, which will not be described again.

In Embodiment 2, the camera 22 and the metal sensor 24 are both installed in the robot 2. Although either one of them can be selected to determine the startup mode of the vehicle body, the robot will have a certain probability of error in actual work, and if only one way of judgment is used, there is a possibility that the judgment will be wrong, resulting in the robot falling from the panel and forming a safety accident.

The robot 2 in this embodiment outputs a mode judgment result through the camera 22 and the mode judgment model, outputs another mode judgment result through the metal sensor 24, and then calculates the two judgment results according to a certain weight ratio to obtain a correction parameter, according to the calibration parameters automatically select the startup mode, making the judgment result of the startup mode more accurate. After the robot is placed on the photovoltaic panel, it can automatically select the startup mode for cleaning, no manual operation is required, and there is no need to set a startup mode button, which improves work efficiency.

In the above embodiments, each embodiment is described with its own emphasis. For parts that are not described in detail in a certain embodiment, please refer to the relevant descriptions of other embodiments.

The above is a detailed introduction to a robot and startup mode determination method thereof and data processing device provided by the embodiments of the present application. This article uses specific examples to illustrate the principles and implementation methods of the present application. The description of the above embodiments is only used to help understand the technical solutions and core ideas of the present application. Those of ordinary skill in the art should understand that they can still modify the technical solutions recorded in the foregoing embodiments, or make equivalent substitutions for some of the technical features. These modifications or substitutions do not cause the essence of the corresponding technical solutions to depart from a scope of the technical solutions of the embodiments of the present application.

## Claims

1. A robot startup mode determination method, comprising the following steps:
using a deep learning algorithm to construct a startup mode judgment model;
capturing at least one real-time picture when the robot is placed on a photovoltaic panel array by using cameras on a left side of a robot and a right side of the robot;
inputting the real-time picture into the startup mode judgment model; and
determining a startup mode of the robot in an initial state, wherein the startup mode comprises a left startup mode and a right startup mode.

2. The robot startup mode determination method according to claim 1, wherein the step of using deep learning algorithms to construct the startup mode judgment model comprises the following steps:
collecting more than two training samples, wherein each training sample comprises a picture, and wherein each picture comprises a label;
grouping the training samples and dividing the pictures with a same label into a same group; and
inputting the grouped training samples into a convolutional neural network model for training, and obtaining the startup mode judgment model.

3. The robot startup mode determination method according to claim 2, wherein the step of collecting more than two training samples comprises the following steps:
placing the robot to a lower left corner of the photovoltaic panel array multiple times;
using the cameras of the robot to collect at least one first picture after each time placing; and
setting a first label for each first picture, wherein the first label corresponds to the left startup mode.

4. The robot startup mode determination method according to claim 2, wherein the step of collecting more than two training samples comprises the following steps:
placing the robot to a lower right corner of the photovoltaic panel array multiple times;
using the cameras of the robot to collect at least one second picture after each time placing; and
setting a second label for each second picture, wherein the second label corresponds to the right startup mode.

5. The robot startup mode determination method according to claim 1, further comprising the following steps:
outputting first group parameters when determining the startup mode of the robot in the initial state;
determining the startup mode of the robot in the initial state by using a metal sensor and outputting second group parameters;
calculating a correction parameter S according to the first group parameters and the second group parameters, wherein S=K1*S1+K2*S2, and wherein K1 and K2 are preset weight coefficients, and wherein K1+K2=1; and
re-judging the startup mode of the robot in the initial state based on result of the correction parameter.

6. The robot startup mode determination method according to claim 5, wherein the step of determining the startup mode of the robot in the initial state by using the metal sensor comprises the following steps:
respectively providing the metal sensor on a left side of a bottom of the robot and a right side of a bottom of the robot, and defining as a left sensor and a right sensor;
synchronously collecting the electrical signals generated by the left sensor and the right sensor when the robot is placed on the photovoltaic panel array; and
determining the startup mode of the robot in the initial state is the left startup mode when the left sensor has a signal and the right sensor has no signal; determining the startup mode of the robot in the initial state is the right startup mode when the left sensor has no signal and the right sensor has a signal.

7. The robot startup mode determination method according to claim 1, wherein after the step of determining the startup mode of the robot in the initial state, further comprises the following steps:
controlling the robot to turn right at a right angle when the robot traveling to an upper edge of the photovoltaic panel array if the startup mode is the left startup mode; controlling the robot to turn left at a right angle when the robot traveling to the upper edge of the photovoltaic panel array if the startup mode is the right startup mode;
a straight movement controlling step, controlling the vehicle body to move straight along an extending direction of the upper edge of the photovoltaic panel array; and
a U-turn controlling step, judging whether the cleaning task is completed when a front end of the robot travels to a left edge line of the photovoltaic panel array or a right edge line of the photovoltaic panel array;
if yes, controlling the robot to stop traveling; if not, controlling the vehicle body to make a left U-turn or a right U-turn and return to the straight movement controlling step.

8. A data processing device, comprising:
a memory configured to store an executable program code; and
a processor connected to the memory, and executing a computer program corresponding to the executable program code by reading the executable program code to perform the robot startup mode determination method according to any one of claims 1 to 7.

9. A robot comprising the data processing device according to claim 8.

10. The robot of claim 9, further comprising:
a vehicle body capable of traveling on the photovoltaic panel array; and
cameras disposed on a left side of the vehicle body and a right side of the vehicle body; the cameras are configured to collect real-time images of the photovoltaic panel array;
wherein the data processing device is installed in the vehicle body and connected to the cameras.

11. The robot of claim 10, wherein,
the photovoltaic panel array is an array planar structure composed of two or more photovoltaic panels; and
each edge of the photovoltaic panel is provided with a metal frame.

12. The robot of claim 10, further comprising:
metal sensors disposed on a left side of a bottom of the vehicle body and a right side of the bottom of the vehicle body, or fixed to the side walls of the vehicle body and extend to the bottom surface of the vehicle body; and
the metal sensor generating and sending a signal to the data processing device when a distance between the metal sensor and the metal frame is less than or equal to a preset threshold.
